# EUROPEAN PATENT APPLICATION

(11) **EP 2 814 230 A1**
(43) Date of publication of application: **17.12.2014**
(21) Application number: 13171919.7
(22) Date of filing: 13.06.2013
(51) Int. Cl.: H04M 1/725

(54) **Apparatus and method pertaining to the obtainment and use of call information**

(71) Applicant: BlackBerry Limited, Waterloo, ON N2K 0A7 (CA)
(72) Inventor: Fields, Gregory Jason, Waterloo, Ontario N2L 3W8 (CA); Abdelsamie, Ahmed, Waterloo, Ontario N2L 3W8 (CA); Smadi, Mohammed Nawaf, Waterloo, Ontario N2L 3W8 (CA); Zehtabioskuie, Ana, Waterloo, Ontario N2L 3W8 (CA)
(74) Representative: Hibbert, Juliet Jane Grace

(57) **Abstract**

An apparatus, such as a portable communication device, has a wireless transceiver (104) configured to conduct voice calls, a close-proximity reader (132) such as, but not limited to, a near-field communications "NFC" reader, and a control circuit (102) that operably couples to the wireless transceiver (104) and the close-proximity reader (132). The control circuit (102) uses the close-proximity reader (132) to obtain call information from another device and uses the wireless transceiver (104) to initiate a call using the call information to thereby permit joining, or establishing, a conference call with three or more access points.

## Description

### Field of Technology

The present disclosure relates to portable electronic devices, and more particularly, to portable communication devices.

### Background

Various portable communication devices are capable of wireless telephony. Increasingly, these portable communication devices have access to multi-party conference call services. By one approach, for example, a call participant uses their portable communication device to dial a conference call dial-in telephone number. Upon being connected the call participant then enters a sequence of numbers (often followed by the "#" character) comprising an access code/password. The facilitating conference-call service then joins that portable communication device to a corresponding multi-party conference call.

By another approach, a call participant can place a present call with another party on hold and then dial the telephone number for a third party. When the third party answers, the call participant can then assert another key or keys to bring all three parties on-line in a three-way conference call.

Generally speaking, the party wishing to join a multi-party conference call, or to join another party to an existing call, must somehow know the relevant information to be entered/dialed and must then enter that information. This requirement, in turn, can frustrate the present wishes of the user as accessing the required information can be difficult, distracting, and/or presently inconvenient or even impossible. Similarly, using the information to effect the desired result can be difficult and/or distracting.

### Brief Description of the Drawings

FIG. 1 is a block diagram in accordance with the disclosure.

FIG. 2 is a flow diagram in accordance with the disclosure.

FIG. 3 is a call-flow diagram in accordance with the disclosure.

FIG. 4 is a call-flow diagram in accordance with the disclosure.

### Detailed Description

The following describes an apparatus and method pertaining to an apparatus, such as a portable communication device, having a wireless transceiver configured to conduct voice calls, a close-proximity reader, and a control circuit that operably couples to the wireless transceiver and the close-proximity reader. The control circuit uses the close-proximity reader to obtain call information from another device and uses the wireless transceiver to initiate a call using the call information.

These teachings are highly flexible in practice. The foregoing call information, can vary with the needs and/or opportunities associated with a given application setting. By one approach, for example, the call information can simply comprise a telephone number for a counterpart device. By another approach, the call information can comprise conference call dial-in information for an in-progress conference call.

These teachings are similarly flexible as regards the aforementioned close-proximity reader. As one useful example, but without intending any limitations in these regards, the close-proximity reader comprises a near-field communications (NFC) reader. So configured, the described actions can automatically occur, if desired, upon placing the two portable communications devices in momentary close proximity to one another. Using this approach, a party can readily, easily, and nearly-transparently join a portable communications device to a conference call by simply achieving the aforementioned close proximity for a few moments.

Accordingly, per these teachings, the corresponding user need not themselves be presently cognizant of the specific call information required to effect the desired conference call arrangement. Similarly, by one approach, the user need not take any specific actions to enter such information, character-by-character, in order to make use of that call information.

These teachings are readily modifiable and scalable and will accommodate a variety of telephony and conference-call services and modalities, call-in and/or call-joinder protocols, and so forth. These teachings are also readily employed in an economic fashion.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

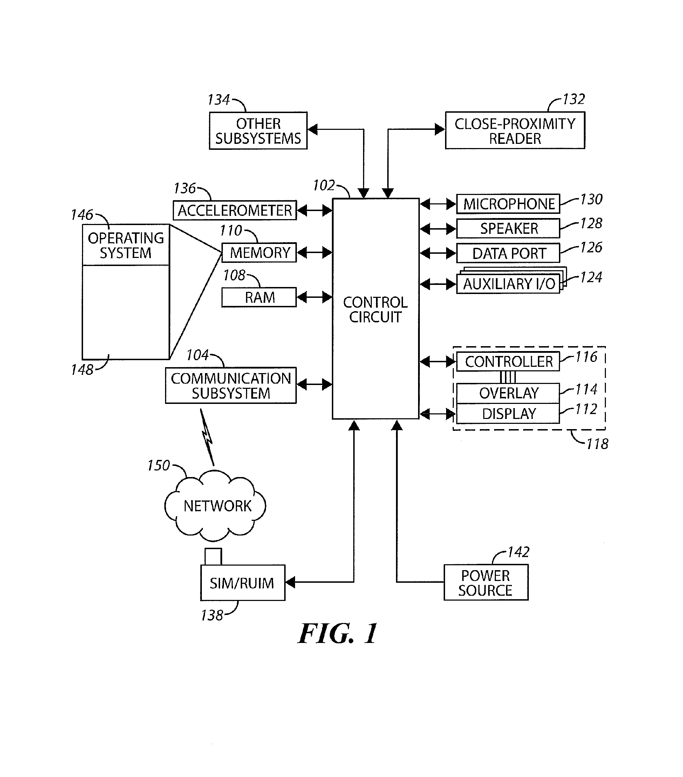

FIG. 1 presents an illustrative example of a portable communication device configured to support the present teachings. It will be understood that no particular limitations are intended by way of the specifics of this example.

This portable communication device includes a control circuit 102 that controls the overall operation of the portable communication device. Corresponding communication functions, including data and voice communications, are performed through a communication subsystem 104 that comprises, at least in part, a wireless transceiver that is configured to conduct voice calls. The communication subsystem 104 receives messages from and sends messages to a wireless network 150.

The wireless network 150 may be any type of wireless network, including, but not limited to, a wireless data networks, a wireless voice network (such as a cellular telephony network), or a network that supports both voice and data communications. The control circuit 102 may also operably couple to a close-proximity reader 132 (such as a near-field communications (NFC) reader which is well known in the art). To identify a subscriber for network access, the portable electronic device may utilize a Subscriber Identity Module or a Removable User Identity Module (SIM/RUIM) card 138 for communication with a network, such as the wireless network 150. Alternatively, user identification information may be programmed into a memory 110.

A power source 142, such as one or more rechargeable batteries or a port to an external power supply, powers the portable communication device. The control circuit 102 may interact with an accelerometer 136 that may be utilized to detect direction of gravitational forces or gravity-induced reaction forces. The control circuit 102 also interacts with a variety of other components, such as a Random Access Memory (RAM) 108, the aforementioned memory 110, an auxiliary input/output (I/O) subsystem 124, a data port 126, a speaker 128, a microphone 130, and other device subsystems 134 of choice.

A display 112 can be disposed in conjunction with a touch-sensitive overlay 114 that operably couples to an electronic controller 116. Together these components can comprise a touch-sensitive display 118 that serves as a graphical-user interface. Information, such as text, characters, symbols, images, icons, and other items may be displayed on the touch-sensitive display 118 via the control circuit 102.

The touch-sensitive display 118 may employ any of a variety of corresponding technologies including but not limited to capacitive, resistive, infrared, surface acoustic wave (SAW), strain gauge, optical imaging, dispersive signal technology, and/or acoustic pulse recognition-based touch-sensing approaches as are known in the art. If the touch-sensitive display 118 should utilize a capacitive approach, for example, the touch-sensitive overlay 114 can comprise a capacitive touch-sensitive overlay 114. In such a case the overlay 114 may be an assembly of multiple stacked layers including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

The portable communication device includes an operating system 146 and software programs, applications, or components 148 that are executed by the control circuit 102 and are typically stored in a persistent, updatable store such as the memory 110. Additional applications or programs may be loaded onto the portable electronic device through the wireless network 150, the auxiliary I/O subsystem 124, the data port 126, the short-range communications subsystem 132, or any other suitable subsystem 134. The memory 110 may comprise a non-transitory storage media that stores executable instructions which, when executed, causes one or more of the functions, steps, or actions described herein. (As used herein, this reference to "non-transitory" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

As a communication device, a received signal such as a text message, an e-mail message, or web page download is processed by the communication subsystem and input to the control circuit 102. The control circuit 102 processes the received signal for output to the display 112 and/or to the auxiliary I/O subsystem 124. A user may generate data items, for example e-mail messages, that may be transmitted over the wireless network 150 through the communication subsystem.

For voice communications, the overall operation of the portable communication device is similar. Using, for example, the aforementioned touch-sensitive display 118 a user can select or otherwise enter the digits comprising a telephone number of a party to call, for example, and the communication subsystem 104 employs that information via the network 150 to call the corresponding party. The speaker 128 outputs audible information converted from electrical signals, and the microphone 130 converts audible information into electrical signals for processing.

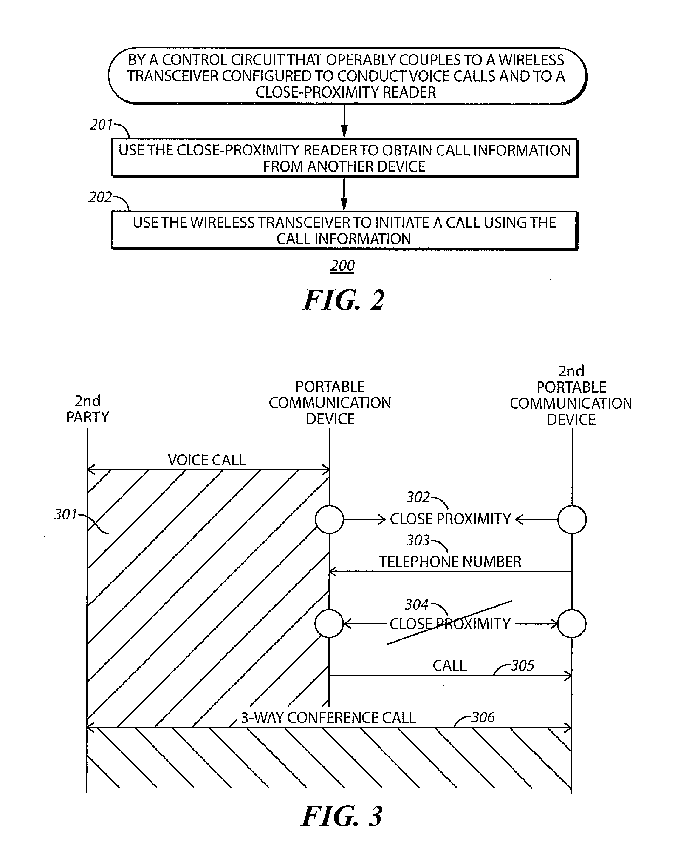

Referring now to FIG. 2, a process 200 that comports with many of the present teachings is presumed, for the sake of illustration, to be carried out by a control circuit that operably couples to a wireless transceiver (that is configured to conduct voice calls such as voice telephony calls) and that also couples to a close-proximity reader. For the sake of an illustrative example these components can be met through use of the above-described portable communication device. It will be understood, however, that other devices having such components can also serve well in these same regards.

At 201 this process 200 provides for using the close-proximity reader to obtain call information from another device (such as another portable communication device such as a so-called smartphone or other cellular-telephony device). By one approach this call-information obtainment activity can occur automatically when the two devices are brought within a minimum proximal range of one another (such as, for example, 1 cm, 2 cm's, 5 cm's, 10 cm's, or some other short distance as corresponds to the operating/coverage range of the particular near-field communications technology and methodology being used).

By one approach, for example, one or both users of these respective devices can be instructed to know to bring these two devices into momentary physical contact with one another to effect this information exchange. More particularly, and again depending upon the near-field communications technology being used, specific parts of these respective devices may need to be brought into close physical juxtaposition with one another to enable and/or cause the described provision of call information. In such a case, these teachings will accommodate having a permanent or temporary visual indicium (such as an arrowhead, the letter "X," and so forth) on the exterior of the device to visually indicate the place on the device that is to be brought into close physical proximity with the counterpart device.

Generally speaking, near-field communications can typically occur very quickly (in less than one second, for example). That said, if desired, these teachings will also accommodate providing an acknowledgement signal to the user upon successful transmittal and/or obtainment of the call information. This acknowledgement signal can comprise any of (and any combination of) a visual, auditory, and/or haptic cue.

As indicated above, by one approach this provision of call information can occur automatically upon the referred-to proximity occurring (or, if desired, upon such proximity occurring and then persisting for at least some minimal amount of time such as one second, two seconds, or some other duration of interest).

By another approach, one or both devices can respond to such proximity by presenting a prompt to one user and/or the other to confirm that the call information should be provided. This prompt can comprise any of a variety of approaches including a textual cue (such as a displayed prompt "Provide Call Information?" or "Receive Conference Call Information?"), a signal light, an auditory tone or spoken prompt, and so forth as desired. When providing a prompt in these regards this process 200 can then further include detecting the user's response to such a prompt and responding in accordance with the substance of that response.

The call information itself can vary to some extent with the application setting. Generally speaking, "call information" refers to information that is necessary to initiate and establish a particular call (i.e., a telephone call). Accordingly, by one approach the call information can comprise a telephone number for another device. This telephone number can be complete by including such fields as a country code and area code or can be partially incomplete by presuming, without specifically presenting, a particular country code, area code, prefix or exchange, and so forth as desired.

By another approach and as another non-limiting example the call information can comprise conference call dial-in information for an in-progress conference call (i.e., a conference call that is, at present, already currently in progress) that includes one of the devices participating in the near-field communications information exchange. Such conference call dial-in information can comprise, for example, a dial-in telephone number along with an access code/password as corresponds to the in-progress conference call. This conference call dial-in information can include control characters as well if desired (such as a pause instruction and/or the "#" character that often serves to indicate the completion of a previously-entered number such as the just-entered access code/password).

At 202, the control circuit that received the aforementioned call information then uses the aforementioned wireless transceiver to initiate a call using that call information. By one approach this can comprise an automatic use that follows in automatic response to having received the aforementioned call information. In that case the automatic use can occur essentially immediately or can follow, if desired, some predetermined period of delay.

By another approach this use of the call information can be made dependent upon the user of the control circuit specifically indicating that such use should occur. In this case, for example, the control circuit can provide an audible and/or other prompt to the user along with providing an opportunity (such as a dedicated or soft button) to permit the user to so select such usage.

Accordingly, by one approach, the control circuit can use the available wireless transceiver to initiate a call by using the call information to inform a conference-call setup process to thereby add the corresponding portable communication device to an existing conference call. By another approach, the control circuit can use the available wireless transceiver to dial the provided telephone number and thereby join the called party as a third party to a previously-two-way call.

By way of further illustration and without intending any particular limitations in these regards, FIG. 3 presents a call-flow diagram for a portable communication device that is already engaged in a voice call 301 with a second party. When the portable communication device comes into close proximity 302 to a second portable communication device, per the foregoing description the latter communicates its own telephone number 303 to the portable communication device. (To be clear, this communication comprises a device-to-device data transmission and not the conveyance of the telephone number via a voice-based message from one user to another.)

The second portable communication device then physically moves away 304 from the portable communication device (or vice versa, or both) and, in any event, the portable communication device calls 305 the second portable communication device using that conveyed telephone number. When the second portable communication device answers that call (either automatically or per the actions of the user of the second portable communication device) the portable communication device then acts to join the second portable communication device to the existing call 301 which now becomes a three-way conference call 306. (Various ways by which a communication device can join one call to another to form a three-way conference call are known in the art. Accordingly, further elaboration in those regards is not provided here for the sake of brevity.)

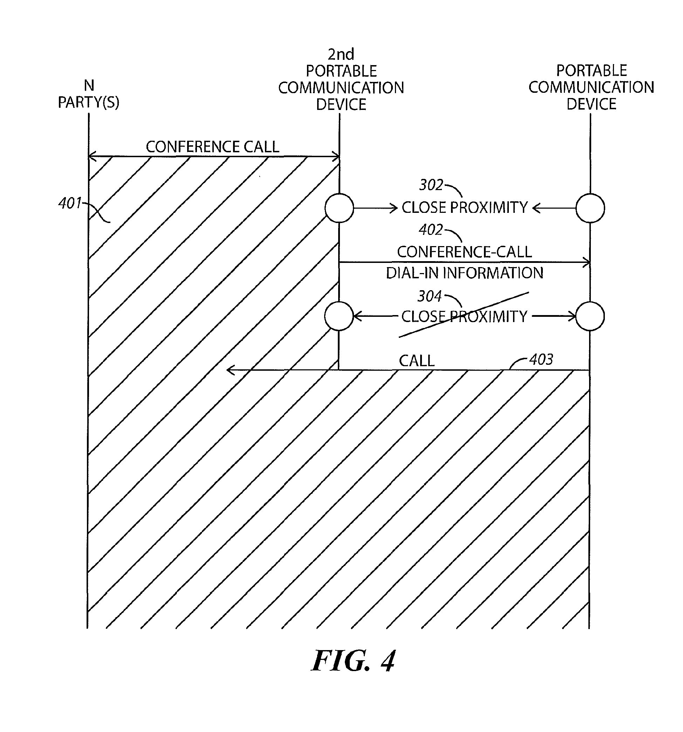

FIG. 4 offers another non-limiting illustrative example as per these teachings. In this example a second portable communication device is already engaged in a conference call 401 with N other parties (where "N" represents an integer). When a sufficiently proximal juxtapositioning 302 occurs between this second portable communication device and another portable communication device, per the foregoing the second portable communication device transmits via its near-field communications capability conference-call dial-in information 402 to the counterpart portable communication device.

This example presumes that these two portable communications devices again assume non-proximal positioning 304 with respect to one another, and in any event the portable communication device that received the conference-call dial-in information uses that information to join 403 the previously-established conference call 401.

So configured, and regardless to some extent of the kind of conference call at issue, these teachings permit an additional platform to be easily added to an existing call without requiring the added party (or the adding party) to specifically recall at the moment of need the information to be dialed. These teachings also permit such a joinder to occur with minimal (or no) specific actions being required on the part of the various parties apart from the simplistic and intuitive action of temporarily bringing two portable communications devices into close proximity with one another.

Accordingly, and as another simple example in these regards, a first portable communication device may be serving as a speaker phone (either via a corresponding dock or on its own) for a number of people in a room who are participating in a conference call via that device with one or more other parties. If one of the parties in the room should find it necessary to physically leave the room, but they wish to continue to participate in the call, they need only momentarily place their own portable communication device in close proximity to the device serving as the speaker phone. This party can then leave the room and their device will facilitate establishing the connection of that device to the conference call, all without requiring this party (or anyone else) to stop and look up the relevant information and convey that information to the leaving party.

Accordingly, these teachings offer great flexibility and transparency as regards including other parties/platforms to existing calls in a highly automated, convenient, and error-free manner.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a wireless transceiver (104) configured to conduct voice calls;
a close-proximity reader (132);
a control circuit (102) operably coupled to the wireless transceiver and the close-proximity reader and configured to:
use (201) the close-proximity reader to obtain call information from another device;
use (202) the wireless transceiver to initiate a call using the call information.

2. The apparatus of claim 1 wherein the apparatus comprises a portable communication device.

3. The apparatus of claim 1 wherein the call information comprises at least one of:
a telephone number (303) for the another device;
conference call dial-in information (402) for an in-progress conference call (401) that includes the another device.

4. The apparatus of claim 1 wherein using the wireless transceiver to initiate the call comprises a part of a conference-call setup process to add the portable communication device to a conference call that includes a second party associated with the another device.

5. The apparatus of claim 1 wherein using the wireless transceiver to initiate the call using the call information comprises automatically responding to obtaining call information comprising a telephone number from the another device, which another device comprises a portable communication device, by initiating the call to the portable communication device using the telephone number.

6. The apparatus of claim 1 wherein the close-proximity reader comprises a near-field communications (NFC) reader.

7. The apparatus of claim 1 wherein the control circuit is configured to use the close-proximity reader to obtain the call information from the another device and to use the wireless transceiver to initiate a call using the call information while the wireless transceiver is engaged in a voice call with a second party.

8. A method comprising:
by a control circuit (102) that operably couples to a wireless transceiver (104) configured to conduct voice calls and to a close-proximity reader (132):
using (201) the close-proximity reader to obtain call information from another device;
using (202) the wireless transceiver to initiate a call using the call information.

9. The method of claim 8 wherein the call information comprises at least one of:
a telephone number (303) for the another device;
conference call dial-in information (402) for an in-progress conference call (401) that includes the another device.

10. The method of claim 8 wherein using the wireless transceiver to initiate the call comprises a part of a conference-call setup process to add the portable communication device to a conference call that includes a second party associated with the another device.

11. The method of claim 8 wherein using the wireless transceiver to initiate the call using the call information comprises automatically responding to obtaining call information comprising a telephone number from the another device, which another device comprises a portable communication device, by initiating the call to the portable communication device using the telephone number.

12. The method of claim 8 wherein the control circuit carries out the method while the wireless transceiver is engaged in a voice call with a second party.

13. A non-transitory memory (110) having computer instructions (148) stored therein, the computer instructions, when executed by a processor (102), causing the processor to:
use (201) a close-proximity reader (132) to obtain call information from another device;
use (202) a wireless transceiver (104) to initiate a call using the call information.

14. The non-transitory memory of claim 10 wherein the call information comprises at least one of:
a telephone number (303) for the another device;
conference call dial-in information (402) for an in-progress conference call (401) that includes the another device.
